Europäisches Patentamt

European Patent Office

Office européen des brevets

(11) Publication number: **0 136 485**
**A2**

# (12) EUROPEAN PATENT APPLICATION

(21) Application number: **84109473.3**

(22) Date of filing: **09.08.84**

(51) Int. Cl.⁴: **G 05 B 19/04**

(30) Priority: **19.09.83 JP 171349/83**

(43) Date of publication of application:
**10.04.85 Bulletin 85/15**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Matsuzaki, Kichie**
**213-40, Kosugayacho**
**Totsuka-ku Yokohama(JP)**

(72) Inventor: **Hata, Seiji**
**20-10, Jonan-1-chome**
**Fujisawa-shi(JP)**

(72) Inventor: **Osako, Kazuyoshi**
**1494-38, Chosakucho**
**Chiba-shi(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) Process monitoring method and apparatus for programmable controllers.

(57) A process monitoring apparatus for programmable controllers monitors controlled process information such as process input and output states or running operation numbers and display the information after superposing the same on a source program. The apparatus preliminarily generates the source program to be displayed from the object program and stores it such that upon monitoring the controlled process only the fetching of the controlled process information is effected and the information is superposed on the source program thereby displaying it. Also, the programmable controller has its control executive section (B) and monitoring console (A) constructed separable from each other so that the two sections are connected only during the monitoring and means (9A) is provided to detect the connection thereby automatically effecting the generation of the source program and making it possible to make a high speed monitoring at any time after the completion of the connection.

./...

# FIG. 2

**(a)** (MONITORING PREPARATION)

(PROCESS MONITORING CONSOLE SECTION A)

(CONTROL EXECUTIVE SECTION B)

| 101 | |
|---|---|
| REQUEST OBJECT PROGRAM | |

| 102 |
|---|
| TRANSFER OBJECT PROGRAM |

| 103 |
|---|
| RECEIVE OBJECT PROGRAM |

| 104 |
|---|
| GENERATE SOURCE PROGRAM |

**(b)** (INPUT/OUTPUT STATE MONITORING)

(PROCESS MONITORING CONSOLE SECTION A)

(CONTROL EXECUTIVE SECTION B)

| 111 |
|---|
| DESIGNATE INPUT/OUTPUT PORTS TO BE MONITORED |

| 112 |
|---|
| READ INPUT/OUTPUT PORT STATES |

| 113 |
|---|
| TRANSFER INPUT/OUTPUT PORT STATES |

| 114 |
|---|
| RECEIVE INPUT/OUTPUT PORT STATES |

| 115 |
|---|
| SUPERPOSE STATES ON SOURCE PROGRAM AND TRANSFER TO CRT IMAGE MEMORY |

: **0136485**. .  .
August 8, 1984 ··
A 5682-EP

# PROCESS MONITORING METHOD AND APPARATUS

# FOR PROGRAMMABLE CONTROLLERS

The present invention relates to programmable controllers for controlling manufacturing equipment and more particularly a controlled process monitoring method and apparatus for monitoring the process of a programmable controller at a high speed.

The programmable controller is advantageous in that not only its programming is easy but also the running state of the process can be monitored easily by displaying the running state of the program on a source program. For example, a function of preparing a program of the relay ladder diagram type by using a CRT and displaying the states of its process input and output contacts by varying their brightness on the relay ladder diagram has been realized.

In accordance with the conventional method, this function has been realized by searching that portion of an object program to be monitored in response to the application of a monitor command, reproducing (generating) a source program from the object program, checking the states of process input and output contacts and varying the brightness of relay symbols on the reproduced source program of the relay ladder diagram type thereby making the display. This type of monitoring apparatus is known in the art by Japanese Laid-Open Patent Applications No. 57-89109 and No. 58-14208.

With the method of the above type, the generation of a source program which requires a long processing time must be performed upon process monitoring and thus there is the disadvantage of increasing the process monitoring response time. In particular, since the control execution speed itself of the programmable controller has recentry been made higher successively, the fact of the process monitoring response time being long and unable to follow the cycle of the control execution has presented a serious problem.

It is an object of the present invention to provide a controlled or running process monitoring method and apparatus capable of monitoring at a high speed the state of a controlled process of a programmable controller.

It is another object of the invention to provide a controlled process monitoring method and apparatus capable of ensuring more reliable and efficient program generation, program acknowledgement, grasping of controlled states, etc., for a programmable controller.

It is still another object of the invention to provide a controlled process monitoring method and apparatus capable of simplifying the operation of process monitoring.

It is still another object of the invention to provide a process monitoring method and apparatus capable of ensuring the monitoring of information which is more suitable for man and a machine.

The present invention is directed to a process monitoring apparatus for programmable controllers which monitors the information of a controlled process such as process input and output states or running operation numbers and displays the information by superposing them on a source program and the apparatus is so designed that the source program to be displayed is preliminarily generated from the object program and stored in a memory whereby upon the controlled process monitoring only the desired controlled process information are fetched and superposed on the source program for display. Also, the programmable controller has its control executive section and a monitoring console arranged separable from each other and interconnectable only upon monitoring and means is provided to detect the interconnection thereby automatically performing the generation of the source program and performing a high-speed monitoring as occasion demands after the completion of the interconnection.

The present invention will be apparent from the following detailed description taken in conjunction with the accompanying drawings, in which:

Fig. 1 is a block diagram showing an embodiment of a programmable controller to which the present invention is applied.

Fig. 2 is a diagram for explaining the outline of the procedure of the process monitoring in the embodiment of Fig. 1.

Fig. 3 is a flow chart showing the processing procedure of the command analizer of Fig. 1.

Fig. 4 is a flow chart showing the processing procedure of the monitor command executive unit of Fig. 1.

Fig. 5 is a flow chart showing the processing procedure of the reverse translator of Fig. 1.

Fig. 6 is a diagram for explaining a process monitoring image of the relay ladder diagram type.

Fig. 7 is a diagram for explaining a process monitoring image of the sequence flow diagram type.

Fig. 8 is a block diagram showing a second embodiment of the process monitoring console section of Fig. 1.

Fig. 9 shows diagrams for explaining the process monitoring image of Fig. 8.

Fig. 10 is a flow chart showing the processing procedure of the process monitoring console section of Fig. 8.

Fig. 11 is a block diagram showing a third embodiment of the process monitoring console section of Fig. 1.

Fig. 12 is a flow chart showing the processing procedure of the console connection detector of Fig. 11.

The present invention will now be described with reference to the illustrated embodiments.

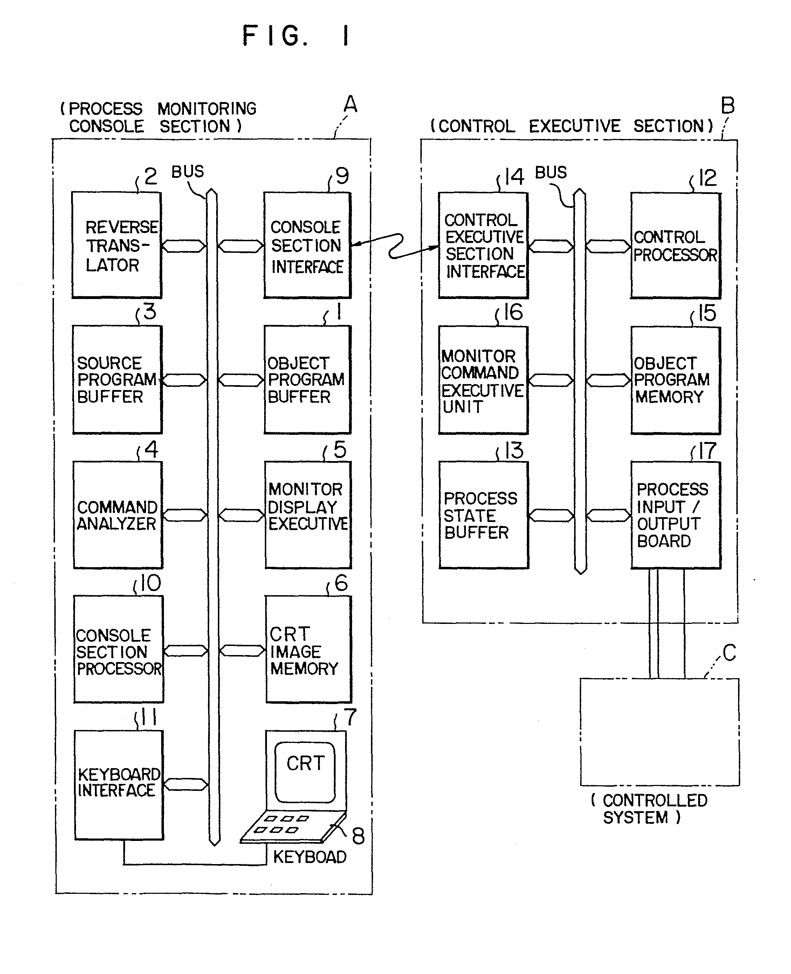

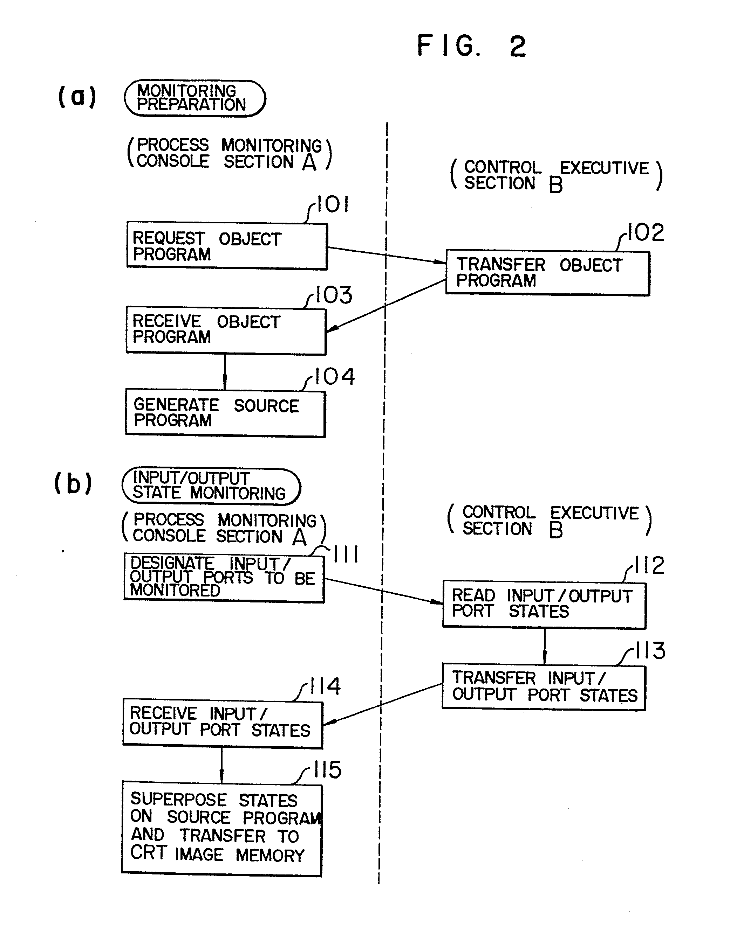

Fig. 1 is a block diagram showing an embodiment of a programmable controller to which is applied a controlled process monitoring method according to the invention and Fig. 2 is a diagram showing the process monitoring procedure of the embodiment of Fig. 1.

In the Figures, symbol A designates a process monitoring console section; B, a control executive section and C a controlled system apparatus. Numeral 1 designates an object program buffer for storing an object program transferred to it from the control executive section B; 2, a reverse translator for converting the object program to a source program; 3, a source program buffer for storing the converted source program; 4, a command analyzer for analyzing an inputted command; 5, a monitor display executive unit for processing data into information suitable for monitoring display; 6, a CRT image memory storing information which is to be displayed on a CRT; 7, a CRT (cathode ray tube display) for storing a source program, etc.; 8, a keyboard for inputting commands, etc.; 9, a console section interface; 10, a program execution console section processor; and 11, a keyboard interface for receiving the signals from the keyboard 8. These component parts form the process monitoring console section A. Also, numeral 12 designates a control processor; 13, a process state buffer for storing process input and output state information; 14, a control executive section interface; 15, an object program memory for storing the object program executed by the control processor 12; 16, a monitor command executive unit; and 17, a process input and output board. These component parts form the control executive section B. In the console section A and the control executive section B, respectively, the component parts are interconnected through a bus.

In Fig. 1, each of the object program buffer 1, the source program buffer 3, the CRT image memory 6, the process state buffer 13 and the object program memory 15 is a read/write memory (RAM). Also, each of the reverse translator 2, the command analyzer 4, the monitor display executive unit 5 and the monitor command executive unit 16 is a memory (ROM) for storing a program having a specified function. The programs stored in these program memories are executed by the console section processer 10 or the control processor 12.

Firstly, in the process monitor console section A, the object program buffer 1 stores the object program transferred to it from the control executive section B through the console section interface 9 and then the object program is retranslated (generated) into the source program by the reverse translator 2 thereby storing it in the soruce program buffer 3.

On the other hand, the command analyzer 4 interprets the command inputted from the keyboard 8 and the processings required for the controlled process monitoring (hereinafter simply referred to as a process monitoring) are commanded to the various parts. Also, the monitor display executive unit 5 generates a monitor display image in accordance with the source program in the source program buffer 3 and the process input and output states transmitted from the control executive section B so that this data is transferred to the CRT image memory 6 and then the image is displayed on the CRT 7. In this case, these processing are performed by the processor 10.

Then, in the control executive section B, the object program to be executed by the control processor 12 is stored in the object program memory 15 and it is then transferred to the process monitoring console section A through the control executive section interface 14. On the other hand, when a command concerning the monitoring is supplied from the process monitoring console section A, the monitor command executive unit 16 responds to the command so that the process states are checked and stored in the process state buffer 13 or alternatively the object program and the process states are transferred to the process monitoring console section A. It is to be noted that program of the command executive unit 16 is executed by the control processor 12.

The transmission and reception of the above-mentioned commands and data between the process monitoring console section A and the control executive section B are effected through the console section interface 9 and the control executive section interface 14.

Referring now to Fig. 2, the process monitoring procedure of the programmable controller constructed as described above will be described briefly.

Firstly, to effect the process monitoring, preliminarily the "monitor preparation" shown in (a) of Fig. 2 is performed. The starting of this processing can be directed as a command from the keyboard 8. With this processing, an object program request command (101) is first applied to the control executive section B from the

0136485

process monitoring console section A (hereinafter simply referred to as a console section). The control executive section B receives the command and then transfers an object program to the console section A (102). The console section A receives the object program (103) and then generates and holds it in the form of the source program (104). By virtue of the foregoing processing, the succeeding process monitoring can be effected at a high speed.

Then, the "input and output state monitoring" of the controlled process is performed in accordance with the procedure shown in (b) of Fig. 2.

Firstly, when the numbers of the input and output ports to be monitored are commanded by the keyboard 8, the command analyzer 4 receives and transfers the numbers to the control execute section B thereby commending to monitor the input and output states (111). In the control executive section B, in accordance with the program of the monitor command executive unit 16 the states of the input and output ports of the process input/output boards 17 are read out and stored in the process state buffer 13 (112) and these states are transferred to the console section A (113). The console section A receives the states of the input and output ports (114) and superposes these states on the diagrammatic data of the preliminarily prepared source program and stores the same in the CRT image memory 16 thereby displaying them on the CRT 7 (115).

The processing of the above-described process monitoring is controlled by the programs of the reverse translator 2, the command analyzer 4 and the monitor display executive unit 5 in the console section A and the program of the command executive unit 16 in the control executive section B. Then, the processing contents of these programs will now be described in accordance with the procedure of the process monitoring.

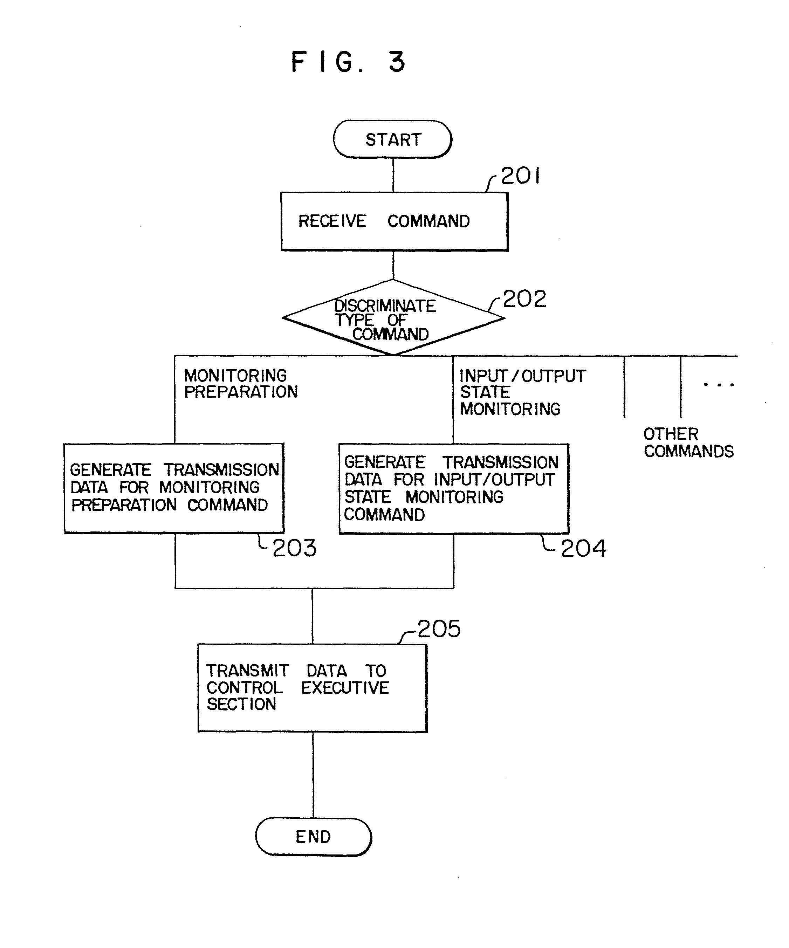

Referring first to Fig. 3, there is illustrated the processing flow of the command analyzer 4 for receiving the process monitoring command from the keyboard 8 through the keyboard interface 11 and supplying a process monitoring instruction to the control executive section B. As shown in the Figure, the command analyzer 4 receives various other commands such as a debugging command in addition to the process monitoring commands. When the command selected by the keyboard 8 is received through the interface 11 and the bus (201), the command analyzer 4 discriminates the type of the command (202). Then, if it is determined that the command is a process monitoring command, the transmission data corresponding to the command are generated (203, 204) and the data are transmitted to the control executive section B through the console section interface 9 (205).

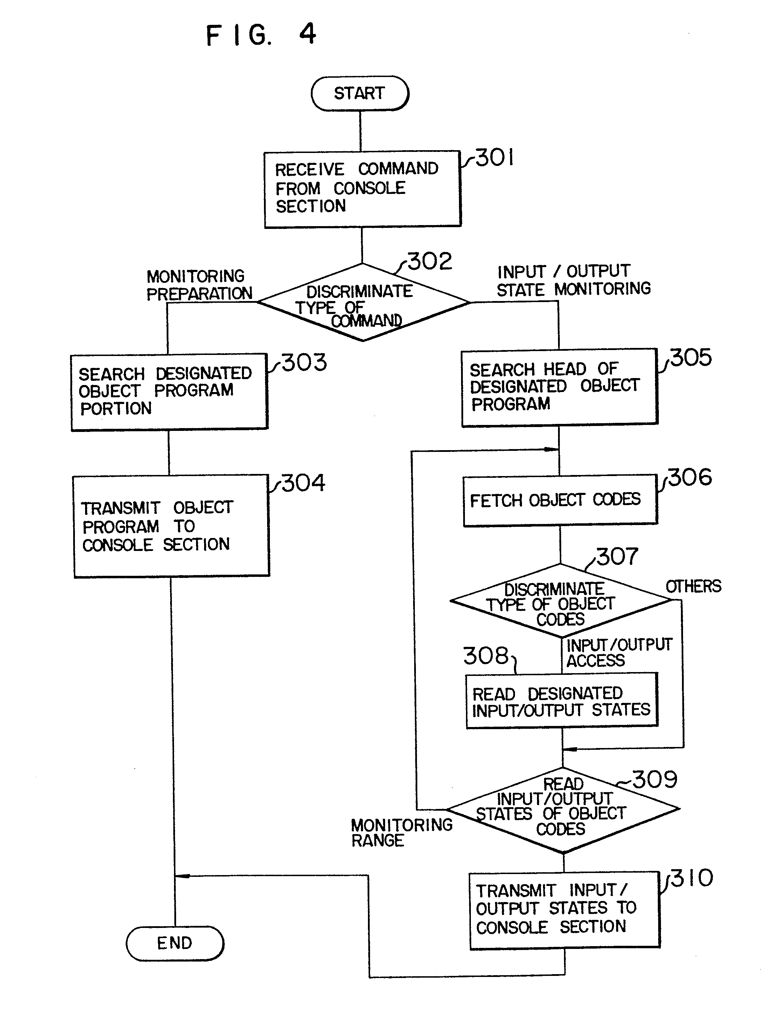

Referring now to Fig. 4, there is illustrated the processing flow of the monitor command executive unit 16. As shown in the Figure, the processing of the monitor command executive unit 16 includes the function of searching the portion to be monitored of the object program stored in the object program memory 15 and transmitting it to the console section A and the function of detecting the states of the inputs and the outputs used by the searched object program and transmitting them to the console section A. In other words, when the command from the console section A is received through the control executive section interface 14 (301), the monitor command executive unit 16 discriminates the type of the command (302). Then, if it is determined that the command is a monitoring preparation command, the designated object program portion in the object program memory 15 is searched (303) and the object program is transmitted to the console section A through the interface 14. On the other hand, if it is determined that the command is one for monitoring the input and output states, the leading portion of the designated object program is searched (305) and the object codes are fetched (306). Then, the types of the codes are discriminated (306) so that if they are input/output access status, the states of the input and output ports at the input and output board 17 are read out (308) and stored in the process state buffer 13. Then, the input and output states corresponding to the object codes whose positions are within the monitoring range are read out (309) and the information indicative of the input and output states and stored in the buffer 13 are transmitted to the console section A through the interface 14 (310).

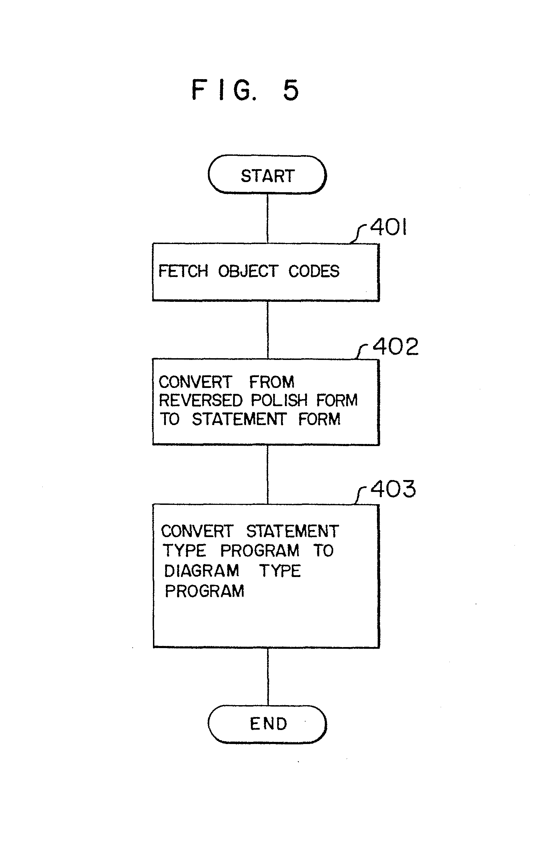

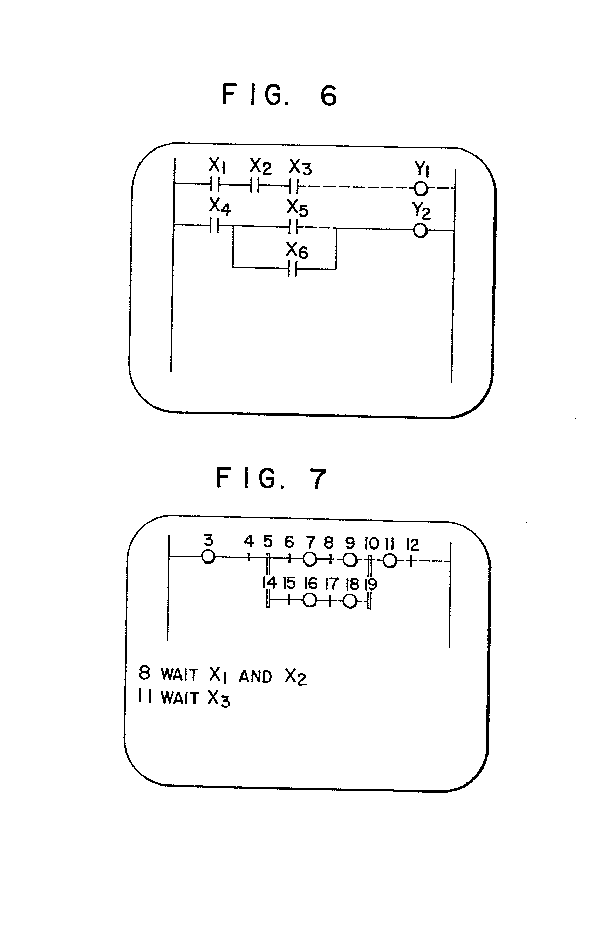

Referring now to Fig. 5, there is illustrated the processing flow of the reverse translator 2 for converting the object program sent from the control executive section B to the source program. In accordance with this processing, as shown in the Figure, the object program stored in the buffer 1 through the interface 9 is fetched word by word from its top (401) so that the fetched object codes are discriminated and converted to the source program of the statement form (402). If the form of the object codes is the reversed polish form which is used frequently as the compiler internal codes, this conversion can be performed easily by for example the reversed polish-type object program conversion method disclosed in the compiler technical literatures such as the "Compiler Construction for Digital Computers" written by David Gries. With this programmable controller, the source program of the statement type is then edited into the source program of a diagrammatic form such as the relay ladder diagram shown in Fig. 6 or the sequence flow diagram shown in Fig. 7 (403). This source program of the diagrammatic form is stored in the source program buffer 3.

The processing of the monitor display executive unit 5 is to superpose the process input and output states transmitted from the control executive section B on the source program of the diagram type in the source program buffer 3 and then write them in the CRT image memory 6 and display on the CRT 7.

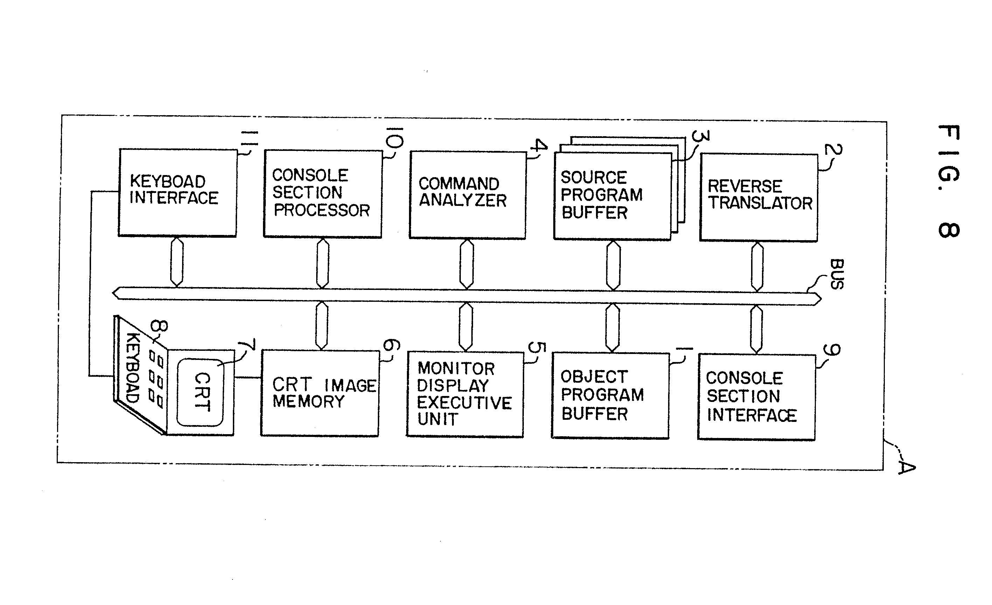

Fig. 8 is a block diagram of the console section A in another embodiment of the programmable controller to which is applied the controlled process monitoring method according to the invention. The embodiment of Fig. 8 differs from the embodiment of Fig. 1 in that a plurality of units of the source program buffer 3 are included. With either of the relay ladder diagram type shown in Fig. 6 and the sequence flow diagram type shown in Fig. 7, there are many cases where a plurality of such images are to be subjected to the process monitoring. In this case, if there are a plurality of the source program buffers 3 so as to retain source programs which have been subjected to the process monitoring, there is no need to generate the source program by the reverse translator 2 each time the images are changed and the switching between the images can be effected at a high speed.

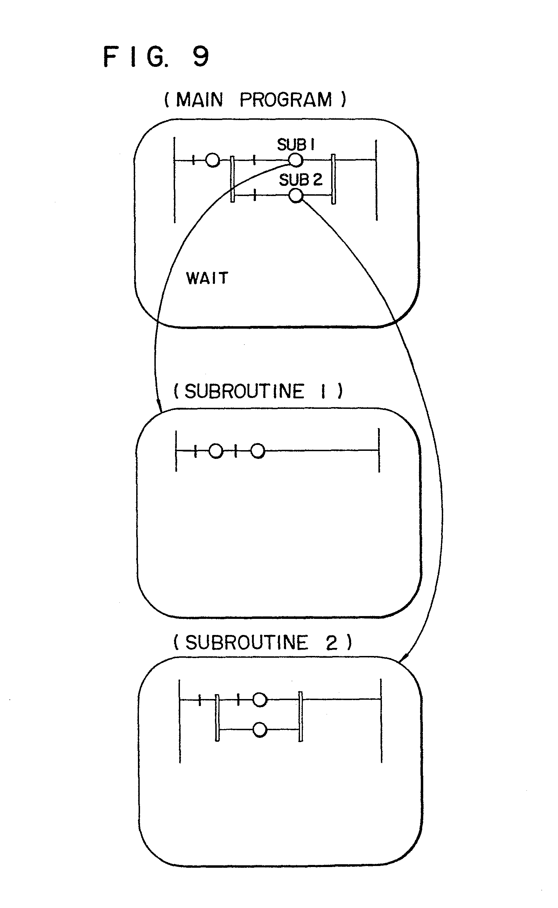

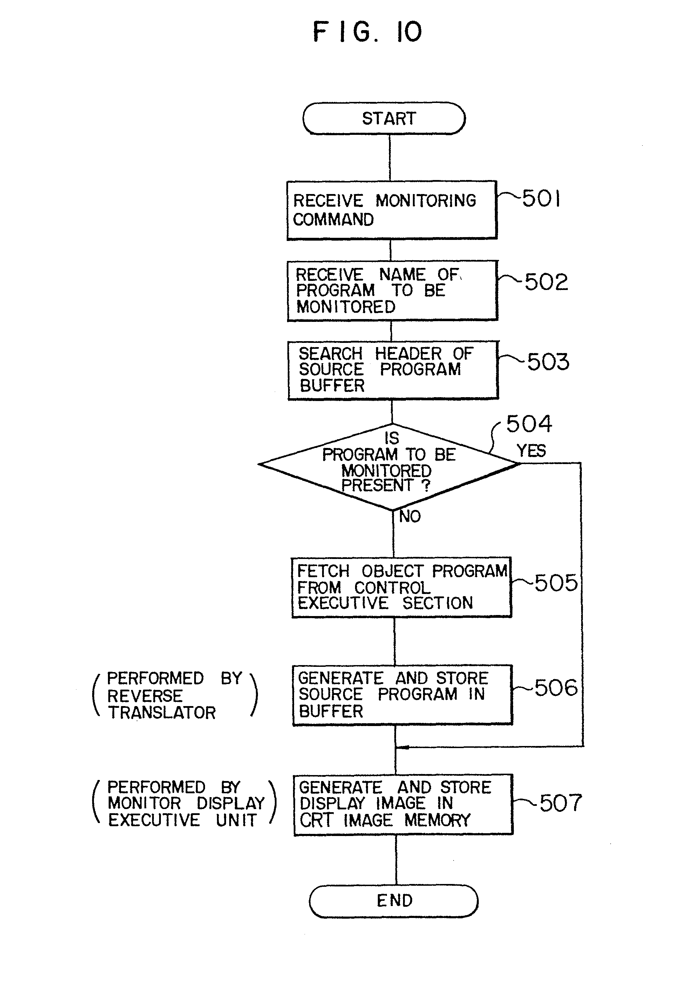

This embodiment including the plurality of source program buffers is particularly effective when used with the process monitoring which executes programs of the sequency flow diagram type. The program of the sequence flow diagram type uses the horizontal lines shown in Fig. 9 and it represents a series of sequential operations. The length of the lines is limited by the width of the display screen. Thus, in order to describe a long sequence of operations, a program is prepared in a top-down fashion by using subroutines and macros. In other words, the main program performs only the calling of the subroutines and macros so as to accommodate the whole of the long-sequence processing program within the display screen. With a program of such structure, the process monitoring is effected in such a manner that a general process monitoring is effected on the main program image and that when a detailed process monitoring is required, the desired subroutine or macro is suitably selected and the desired process monitoring is effected on its image. In other words, the process monitoring is effected by suitably selecting the program images of the main program and the subroutines. Fig. 10 shows the processing flow of the command analyzer 4 for this purpose. The source programs of the main program, the subroutines and the macros are respectively stored in the plurality of source program buffers 3 and their names are described in the headers of the source program buffers 3.

When the process monitoring command and the name of the program to be monitored are received (501, 502), the command analyzer 4 searches the headers of the buffers 3 (503) so that if the program has been stored (504), its content is stored in the CRT image memory 6 (507) and the content which has previously been stored in the CRT image memory 6 is retained in the source program buffer 3. When the searching of the headers shows that the designated program is stored in none of the source program buffers 3 (504), the desired object program is received from the control executive section B by the similar processing as in Figs. 3 and 5 (505) so that after the source program has been generated and stored in the source program buffer 3 (506), the source program is stored in the CRT image memory 6 and then displayed on the CRT 7.

These processings are performed in accordance with the programs of the command analyzer 4, the reverse translator 2 and the monitor display executive unit 5.

Then, the number of program images which are to be monitored simultaneously is not so large that the use of several source program buffers 3 makes it possible to effect in almost all cases the desired switching of the program images to be monitored at a high speed without any time consuming source program generation.

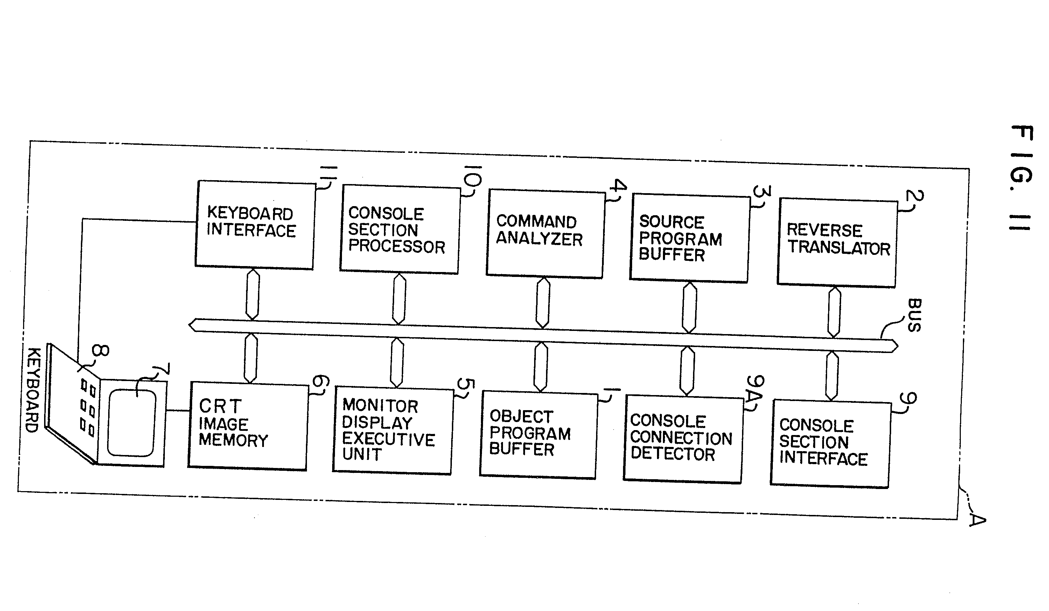

Fig. 11 is a block diagram of the process monitoring console section A of still another embodiment of the programmable controller to which is applied the controlled process monitoring method according to the invention.

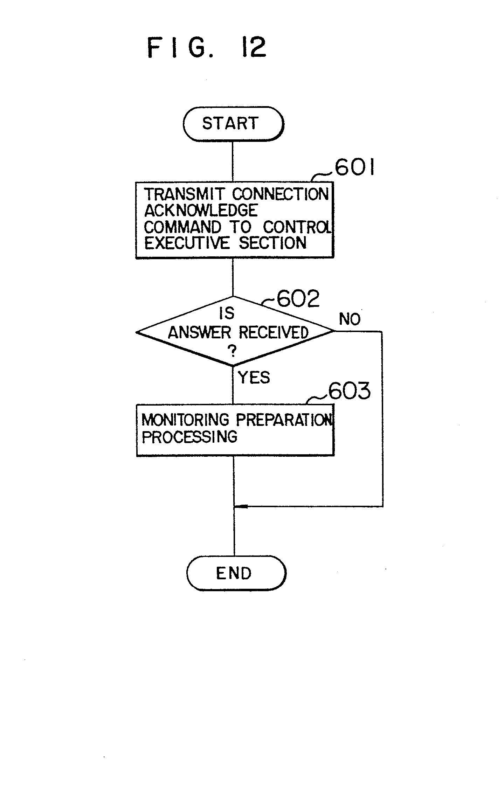

In the Figure, the component parts including from an object program buffer 1 to a keyboard interface 11 are equivalent to those designated by the same reference numerals in Fig. 1 and a console connection detector 9A is added to the former. Now referring to Fig. 12, there is illustrated the processing flow of the console connection detector 9A. As shown in the Figure, the program of the console connection detector 9A is executed at intervals of a predetermined period such that when the console section A is energized, a connection acknowledge signal is sent to the control executive section B (601) and the connection between the console section A and the control executive section B is acknowledged upon receiving an answer (602). Then, the similar processing as the "monitoring preparation" of Fig. 2 is started automatically (603). Thus, the process monitoring operations are simplified.

- 15 -

0136485

Lastly, the monitoring images will be explained.

Fig. 6 is a diagram for explaining a process monitoring image of the relay ladder diagram type which is widely used with the programmable controllers, and Fig. 7 is a diagram for explaining a process monitoring image of the sequence flow diagram type which is used mainly for representing an operating sequence of machine equipment.

Since the sequence flow (step) diagram type is a very complicated diagram as compared with the relay ladder diagram type thus requiring a long period of time for the translation of the object program back into the source program, in accordance with the controlled process monitoring method of this invention the source program is preliminarily obtained by retranslation prior to the monitoring and therefore the monitoring can be effected at a high speed.

Also, while Fig. 2 shows the process monitoring in the form of the procedure for monitoring the states of the input and output ports, in the case of the step diagram type, the execution step numbers can also be monitored and it is only necessary to send an execution step number request command from the console section A to the control executive section B.

In the past, to effect the process monitoring, the following three processings are required: (1) the transmission of the object program and process information from the control execution section B to the process monitoring console section A, (2) the retranslation (generation) of the source program from the object program, and (3) the generation of monitoring images. On the contrary, in accordance with the above-mentioned embodiment the foregoing (1) and (2) are performed preliminarily prior to the process monitoring and therefore it is only necessary to effect the transmission of process information to the process monitoring console section A from the control executive section B and the generation of monitoring images to effect the process monitoring. Thus, where the process monitoring of the relay ladder diagram type which is usually employed by the programmable controller is performed, the processing time is reduced to about one half.

In other words, this overcomes the disadvantage that while the recent development of LSIs, etc., has increased the control execution speed itself of the programmable controller such that the scanning time of about 10 millisec is realized in the case of executing a 10K-word program at the rate of one instruction per about one microsec, the time required for the process monitoring is several tens millisec thereby making it impossible to grasp the controlled states.

Further, this embodiment is more effective when used to effect the process monitoring of the step diagram type corresponding to the operating sequence of a machine. The reason is that with the step diagram type, the retranslation of the object program to the source program is more complicated thus requiring a longer processing time than in the case of the relay ladder diagram type and thus the effect of preliminarily generating the source program is more prominent.

From the foregoing detailed description it will be seen that in accordance with the present invention the condition of a controlled process of a programmable controller can be monitored at a high speed and thus there is a great advantage of ensuring greater reliability and efficiency for the preparation and confirmation of programs, the grasping of controlled states, etc., of the programmable controller.

- 1 -

0136485

CLAIMS:

1.      A process monitoring apparatus for a programmable controller for monitoring controlled process information such as process input and output states and displaying the information after superposing the same on a source program, said apparatus comprising:

        (a)  means (1, 2, 3, 10) for preliminarily receiving an object program to be executed by a control executive section (B) by a monitoring console section (A) from said control executive section (B), generating a source program from said received program and storing said source program;

        (b)  means (4, 10) for fetching said controlled process information upon monitoring of said controlled process; and

        (c)  means (5, 6, 7, 10) for displaying said controlled process information after superposing the same on said source program.

2.      An apparatus according to claim 1, wherein said monitoring console section (A) and said control executive section (B) are constructed separately from each other, and wherein said monitoring console section (A) includes means (9A) for detecting a connection between said monitoring console section (A) and said control executive section (B) whereby upon detecting the connection of said monitoring console section (A) to said control executive section (B), an object program stored in said control executive section (B) is received and a display source program is

- 2 -

0136485

generated thereform.

3.      An apparatus according to claim 1, wherein said means for generating and storing said source program comprises:

a first memory (1) for storing an object program transferred from said control executive section (B);

a second memory (2) for storing a program for converting said object program stored in said first memory (1) to a display source program; and

at least one third memory (3) for storing said converted source program.

4.      An apparatus according to claim 3, wherein said program stored in said second memory (2) comprises:

means (401) for fetching said object program stored in said first memory (1) word by word from the top thereof;

means (402) for discriminating and converting said fetched object program to a source program of a statement type; and

means (403) for converting said converted statement-type source program to a diagram-type source program and storing the same in said third memory (3).

5.      An apparatus according to claim 4, wherein said diagram-type source program comprises an information to be displayed in the form of a relay ladder diagram.

6.      An apparatus according to claim 4, wherein said diagram-type source program comprises an information to be displayed in the form of a sequence flow diagram.

7.      An apparatus according to claim 3, wherein a plurality of said third memories (3) are provided, and wherein each of said memories (3) stores a different source program together with an identification code.

8.      An apparatus according to claim 7, wherein each of said plurality of third memories (3) separately stores one of a main program and subroutine programs associated therewith.

9.      An apparatus according to claim 1, wherein said means for fetching said controlled process information comprises a memory (4) for storing a program for analyzing an inputted command.

10.      An apparatus according to claim 9, wherein said program stored in said memory (4) comprises:

means (202) for discriminating whether said inputted command is a controlled process monitoring command;

means (204) responsive to the discrimination of said monitoring command to generate transmission data corresponding to said monitoring command; and

means (205) for transmitting said generated data to said control executive section (B).

11.      An apparatus according to claim 1, wherein said display means comprises:

a memory (5) for storing a program for generating image information suitable for a monitoring display in accordance with said source program and said controlled process information fetched upon monitoring of said controlled process;

a memory (6) for storing said monitoring display image information; and

a display (7) for displaying said image information.

12.      An apparatus according to claim 1, wherein said control executive section (B) comprises:

a first memory (15) for storing said object program to be executed;

a second memory (16) for storing a program for analyzing a command transferred from said monitoring console section (A);

a third memory (13) for storing state information of process inputs and outputs forming controlled variables;

processing means (12) for executing said object program stored in said first memory (15) and responsive to said program stored in said second memory (16) to perform a control such that said object program stored in said first memory (15) or said process input and output state information stored in said third memory (13) is transferred to said monitoring console section (A) in accordance with said command transferred from said monitoring console section (A).

13.      A process monitoring apparatus for a programmable controller comprising:

(a)   a first buffer memory (1) for storing an object program transferred from a control executive section (B);

(b)   a first program memory (2) for storing a program for converting said object program to a source program;

(c) a second buffer memory (3) for storing said converted source program;

(d) a keyboard (8) for inputting a command;

(e) a second program memory (4) for storing a program for analyzing said inputted command;

(f) a third program memory (5) for storing a program for generating image information suitable for monitoring display from said source program stored in said second buffer memory (3) and process input and output states transferred from said control executive section (B);

(g) a third buffer memory (6) for storing said monitoring display image information;

(h) a display (7) for superposing and displaying said source program and said process input and output state information;

(i) a first processor (10) for executing the programs stored in said first, second and third program memories (2, 4, 5) to perform a control such that when a command inputted from said keyboard (8) is discriminated as an object program request command, said control executive section (B) is commanded to transfer said object program so that said transferred object program is stored in said first buffer memory (1), converted to a source program and stored in said second buffer memory (3) preliminarly after which when another inputted command is discriminated as an input and output state request command, said 0136485

executive section (B) is commanded to transfer state
information of input and output ports to be monitored so
that said transferred input and output port state information and diagram data of said preliminarily generated
source program are superposed and stored in said third
buffer memory (6);

(j) a fourth buffer memory (13) for storing
state information of process inputs and outputs forming
controlled variables;

(k) a fifth buffer memory (15) for storing an
object program to be executed;

(l) a fourth program memory (16) for storing a
program for analyzing a command transferred from a
monitoring console section (A); and

(m) a second processor (12) for executing said
program stored in said fourth program memory (16) to
perform a control such that when a command is received
from said console section (A), the type of said command
is discriminated so that the object program stored in said
fifth buffer memory (15) is read out and transferred to
said console section (A) when said command is an object
program transfer command and input and output states of
a designated process are read out from said fourth buffer
memory (13) and transferred to said console section (A)
when said command is an input and output state monitoring
command.

14.      A process monitoring method for programmable controllers comprising:

(a)   a first step (4, 10) of discriminating a command requesting the transfer of a first program to be executed by a control executive section (B) and commanding said control executive section (B) to transmit said first program;

(b)   a second step (1, 2, 3, 10) of converting said first program transferred by said first step to a second program for display and storing the same;

(c)   a third step (4, 10) of discriminating a command requesting the monitoring of input and output states by said control executive section (B) and commanding said control executive section (B) to transfer input and output state indicative information; and

(d)   a fourth step (5, 6, 7, 10) of displaying said input and output state indicative information transferred by said third step after superposing the same on said second program stored by said second step.

15.      A process monitoring method for programmable controllers comprising the steps of:

(a)   discriminating (4) a first command for monitoring preparation in a monitoring console section (A);

(b)   generating and transmitting (4, 10) transmission data corresponding to said first command to a control executive section (B);

(c)   discriminating (16) said first command from said console section (A) and searching (12, 15) a designated object program in said control executive section (B);

(d) transmitting (12) said designated object program to said console section (A);

(e) converting (1, 2, 3) said transmitted object program to a statement-type source program in said console section (A);

(f) further converting (5) said converted statement-type source program to a diagram-type source program and storing (6) the same;

(g) discriminating (4) a second command for input and output state monitoring in said console section (A);

(h) generating (4) and transmitting (10) transmission data corresponding to said second command to said control executive section (B);

(i) discriminating (16) said second command from said console section (A) and searching (12, 15) a designated object program in said control executive section (B);

(j) determining (12, 15) an object program having accessible inputs and outputs;

(k) transmitting (12, 13, 17) an information indicative of input and output states of said determined object program to said console section (A); and

(l) storing (5, 6) said transmitted input and output state indicative information after superposing the same on said diagram-type source program and displaying (7) the same.

# FIG. I

(PROCESS MONITORING CONSOLE MONITORING SECTION) A

(CONTROL EXECUTIVE SECTION) B

BUS

**2** REVERSE TRANSLATOR

**9** CONSOLE SECTION INTERFACE

**14** CONTROL EXECUTIVE SECTION INTERFACE

BUS

**12** CONTROL PROCESSOR

**3** SOURCE PROGRAM BUFFER

**1** OBJECT PROGRAM BUFFER

**16** MONITOR COMMAND EXECUTIVE UNIT

**15** OBJECT PROGRAM MEMORY

**4** COMMAND ANALYZER

**5** MONITOR DISPLAY EXECUTIVE

**13** PROCESS STATE BUFFER

**17** PROCESS INPUT / OUTPUT BOARD

**10** CONSOLE SECTION PROCESSOR

**6** CRT IMAGE MEMORY

**11** KEYBOARD INTERFACE

**7** CRT

**8** KEYBOARD

C (CONTROLLED SYSTEM)

# F I G. 2

**(a)** (MONITORING PREPARATION)

( PROCESS MONITORING CONSOLE SECTION A )　　　　　( CONTROL EXECUTIVE SECTION B )

```
┌─────────────────────┐ 101          ┌─────────────────────┐ 102
│ REQUEST  OBJECT     │─────────────▶│ TRANSFER  OBJECT    │
│ PROGRAM             │              │ PROGRAM             │
└─────────────────────┘              └─────────────────────┘
┌─────────────────────┐ 103 ◀───────────┘
│ RECEIVE  OBJECT     │
│ PROGRAM             │
└─────────────────────┘
          │
          ▼
┌─────────────────────┐ 104
│ GENERATE  SOURCE    │
│ PROGRAM             │
└─────────────────────┘
```

**(b)** (INPUT/OUTPUT STATE MONITORING)

( PROCESS MONITORING CONSOLE SECTION A )　　　　　( CONTROL EXECUTIVE SECTION B )

```
┌─────────────────────┐ 111          ┌─────────────────────┐ 112
│ DESIGNATE  INPUT/   │─────────────▶│ READ  INPUT/OUTPUT  │
│ OUTPUT PORTS TO BE  │              │ PORT  STATES        │
│ MONITORED           │              └─────────────────────┘
└─────────────────────┘                        │
                                               ▼
                                     ┌─────────────────────┐ 113
┌─────────────────────┐ 114          │ TRANSFER  INPUT/    │
│ RECEIVE  INPUT/     │◀─────────────│ OUTPUT PORT STATES  │
│ OUTPUT PORT STATES  │              └─────────────────────┘
└─────────────────────┘
          │
          ▼
┌─────────────────────┐ 115
│ SUPERPOSE  STATES   │
│ ON  SOURCE PROGRAM  │
│ AND  TRANSFER TO    │
│ CRT IMAGE MEMORY    │
└─────────────────────┘
```

# F I G. 3

```
        ┌─────────────┐
        │    START    │
        └──────┬──────┘
               │           ⌐201
        ┌──────┴──────────────────┐
        │   RECEIVE   COMMAND     │
        └──────┬──────────────────┘
               │
          ◇────┴────◇     ⌐202
         ╱ DISCRIMINATE ╲
        ╱   TYPE  OF     ╲
        ╲   COMMAND      ╱
         ╲──────┬───────╱
```

MONITORING
PREPARATION

INPUT / OUTPUT
STATE
MONITORING

OTHER
COMMANDS

. . .

┌───────────────────────────┐
│ GENERATE  TRANSMISSION     │
│ DATA FOR MONITORING        │
│ PREPARATION COMMAND        │
└───────────────────────────┘
                    └203

┌───────────────────────────┐
│ GENERATE  TRANSMISSION     │
│ DATA FOR INPUT/OUTPUT      │
│ STATE  MONITORING          │
│ COMMAND                    │
└───────────────────────────┘
                    └204

⌐205

┌───────────────────────────┐
│ TRANSMIT  DATA  TO         │
│ CONTROL  EXECUTIVE         │
│ SECTION                    │
└───────────────────────────┘

┌─────────────┐
│     END     │
└─────────────┘

F I G.  4

START

301 RECEIVE COMMAND FROM CONSOLE SECTION

302 DISCRIMINATE TYPE OF COMMAND

MONITORING PREPARATION

INPUT / OUTPUT STATE MONITORING

303 SEARCH DESIGNATED OBJECT PROGRAM PORTION

305 SEARCH HEAD OF DESIGNATED OBJECT PROGRAM

304 TRANSMIT OBJECT PROGRAM TO CONSOLE SECTION

306 FETCH OBJECT CODES

307 DISCRIMINATE TYPE OF OBJECT CODES

OTHERS

INPUT/OUTPUT ACCESS

308 READ DESIGNATED INPUT/OUTPUT STATES

309 READ INPUT/OUTPUT STATES OF OBJECT CODES

MONITORING RANGE

310 TRANSMIT INPUT / OUTPUT STATES TO CONSOLE SECTION

END

0136485

# FIG. 5

```
        ┌─────────────┐
        │    START    │
        └──────┬──────┘
               │
        ┌──────┴──────────────┐ ┌401
        │ FETCH OBJECT CODES  │
        └──────┬──────────────┘
               │
        ┌──────┴──────────────┐ ┌402
        │ CONVERT  FROM       │
        │ REVERSED POLISH FORM│
        │ TO  STATEMENT  FORM │
        └──────┬──────────────┘
               │
        ┌──────┴──────────────┐ ┌403
        │ CONVERT STATEMENT   │
        │ TYPE PROGRAM TO     │
        │ DIAGRAM  TYPE       │
        │ PROGRAM             │
        └──────┬──────────────┘
               │
        ┌──────┴──────┐
        │    END      │
        └─────────────┘
```

## F I G. 6

## F I G. 7

8 WAIT $X_1$ AND $X_2$

11 WAIT $X_3$

FIG. 8

# F I G. 9

(MAIN PROGRAM)

SUB 1

SUB 2

WAIT

(SUBROUTINE 1)

(SUBROUTINE 2)

0136485

# F I G. 10

```
                    ┌─────────────┐
                    │    START    │
                    └──────┬──────┘
                           │
              ┌────────────────────────┐
              │ RECEIVE  MONITORING    │~501
              │ COMMAND                │
              └────────────┬───────────┘
                           │
              ┌────────────────────────┐
              │ RECEIVE  NAME OF       │~502
              │ PROGRAM  TO BE         │
              │ MONITORED              │
              └────────────┬───────────┘
                           │
              ┌────────────────────────┐
              │ SEARCH  HEADER OF      │~503
              │ SOURCE  PROGRAM        │
              │ BUFFER                 │
              └────────────┬───────────┘
                           │
                       ╱───┴────╲              504
                      ╱   IS     ╲  YES
                     ╱ PROGRAM TO ╲────────────┐
                     ╲ BE MONITORED╱           │
                      ╲ PRESENT ? ╱            │
                       ╲────┬────╱             │
                         NO │                  │
                           │                   │
              ┌────────────────────────┐       │
              │ FETCH  OBJECT PROGRAM  │~505    │
              │ FROM  CONTROL          │        │
              │ EXECUTIVE  SECTION     │        │
              └────────────┬───────────┘        │
                           │                    │
              ┌────────────────────────┐        │
              │ GENERATE  AND STORE    │~506     │
              │ SOURCE  PROGRAM IN     │        │
              │ BUFFER                 │        │
              └────────────┬───────────┘        │
                           │◄───────────────────┘
                           │
              ┌────────────────────────┐
              │ GENERATE  AND STORE    │~507
              │ DISPLAY  IMAGE IN      │
              │ CRT  IMAGE MEMORY      │
              └────────────┬───────────┘
                           │
                    ┌──────┴──────┐
                    │     END     │
                    └─────────────┘
```

( PERFORMED  BY
  REVERSE
  TRANSLATOR )

( PERFORMED  BY
  MONITOR  DISPLAY
  EXECUTIVE  UNIT )

F I G. II

## FIG. 12

```
        ┌─────────┐
        │  START  │
        └─────────┘
             │
             │            ~601
   ┌─────────────────────┐
   │ TRANSMIT CONNECTION │
   │ ACKNOWLEDGE         │
   │ COMMAND TO CONTROL  │
   │ EXECUTIVE SECTION   │
   └─────────────────────┘
             │
             │      ~602
          ◇IS                NO
     ANSWER RECEIVED ──────────┐
          ?                    │
          │ YES                │
          │            ~603    │
   ┌──────────────────────┐    │
   │ MONITORING PREPARATION│   │
   │ PROCESSING            │   │
   └──────────────────────┘    │
             │                 │
             │←────────────────┘
        ┌─────────┐
        │   END   │
        └─────────┘
```